# EUROPEAN PATENT SPECIFICATION

(11) **EP 2 465 026 B1**
(45) Date of publication and mention of the grant of the patent: **04.04.2018**
(21) Application number: 10808067.2
(22) Date of filing: 23.07.2010
(51) Int. Cl.: G06F 3/048, G06F 11/32, G09G 5/00, G09G 5/14, H04N 1/00

(54) **INFORMATION PROCESSING APPARATUS, INFORMATION PROCESSING METHOD AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ ET PROGRAMME DE TRAITEMENT D'INFORMATIONS

(30) Priority: 13.08.2009 JP 2009187789
(43) Date of publication of application: 20.06.2012
(73) Proprietor: Canon Kabushiki Kaisha, Tokyo 146-8501 (JP)
(72) Inventor: ITO, Daisuke, Tokyo 146-8501 (JP)
(74) Representative: TBK
(86) International application number: PCT/JP2010/004733
(87) International publication number: WO 2011/018881

(56) References cited:
- EP-A2- 1 874 025
- JP-A- 10 021 039
- JP-A- 2007 128 364
- US-A1- 2002 171 681
- US-A1- 2006 080 571

## Description

### Technical Field

The present invention relates to an information processing apparatus for controlling of displaying an error which is occurred in a job that is assigned to the image forming apparatus by a web application when it is displayed for operating the web application on a web browser.

### Background Art

Heretofore, there has been a system configured of an image forming apparatus and an apparatus that serves as a web server having a web application installed therein. A typical image forming apparatus included in such a system is a multi-function peripheral (MFP) or a laser beam printer (LBP).

In this system, a user accesses a web application installed in a server via a web browser in an image forming apparatus, and instructs the web application to assign a printing job to the image forming apparatus. Use of a web application is advantageous in various ways as compared to using a job-control application locally stored in each image forming apparatus. For example, assume a case where many image forming apparatuses are installed for use. When a setting is to be changed, usually, changes need to be made individually in locally stored applications. However, if a web application is employed, a change only in the setting of the web application installed in a server enables changes in the settings of practically all the image forming apparatuss using the web application. Moreover, use of a web application enables a server to manage settings of individual users, and thus a user can use another image forming apparatus with the same settings.

In such a system, a screen indicating an error content is displayed in the frontmost side on the display screen when an error such as a jam error occurs during execution of a printing job, for example, the job being assigned to an image forming apparatus by a web application. The error screen continues to be displayed afterward in the frontmost side on the display screen while the error is present. This is effective in that a user of the image forming apparatus can be notified of the error at one look.

As conventional means for controlling display of an error screen, there is known a method (e.g., see Patent Literature 1) in which errors are assigned priority orders in advance, so that error screens can be displayed according to the order when multiple errors occur.

Further background art can be found in document EP 1 875 025 A2 comprising an image processing apparatus, an image processing method and a storage medium.

### Citation List

### Patent Literature

PTL 1: Japanese Patent Laid-Open No. H06-052018(1994)

### Summary of Invention

### Technical Problem

In the technique disclosed in Patent Literature 1 of controlling display of error screens or the above-described system of displaying an error screen upon occurrence of an error, an error screen is always displayed in the frontmost side on the display screen when an error occurs in the image forming apparatus in order to draw the user's attention. For this reason, the error screen is also displayed on a screen for operating a web application which is not directly relevant to the error which has occurred. Accordingly, there is a problem that operability of an image forming apparatus is not considered for a case of using a browser that can display screens for operating multiple web applications (i.e., web applications with different URL).

Against this background, the present invention provides a technique that solves the aforementioned problem and improves convenience in user operability.

### Solution to Problem

The present invention discloses an information processing apparatus, an information processing method and a program according to the respective independent claims. Advantageous further developments are as set out in respective dependent claims.

### Advantageous Effects of Invention

According to the present invention, display of an error screen can be optimally controlled for each application displayed on a browser even when an error occurs in an image forming apparatus. In particular, in a state where screens corresponding to multiple web applications can be displayed alternatively, the error screen can be controlled not be displayed on a screen of an application which is irrelevant to the error. Hence, user operability can be improved.

Further features of the present invention will become apparent from the following description of exemplary embodiments with reference to the attached drawings.

### Brief Description of Drawings

[fig.1]Fig. 1 is a diagram showing an exemplar system configuration of the present embodiment;
[fig.2]Fig. 2 is a diagram showing an exemplar software configuration of the present embodiment;
[fig.3]Fig. 3 is a flowchart showing an exemplar processing of the present embodiment in a case of displaying a window on a browser;
[fig.4]Fig. 4 is a flowchart showing an exemplar processing of the present embodiment in a case where a job error occurs;
[fig.5]Fig. 5 is a flowchart showing an exemplar processing of the present embodiment in a case of displaying a screen according to an error;
[fig.6]Fig. 6 is a flowchart showing an exemplar processing of the present embodiment in a case where an error is cleared;
[fig.7A]Fig. 7A is a diagram showing an example of a display screen of the present embodiment;
[fig.7B]Fig. 7B is a diagram showing an example of a display screen of the present embodiment; and
[fig.8]Fig. 8 is a diagram showing an exemplar hardware configuration of the present embodiment.

### Description of Embodiments

A description will be given of a best mode for carrying out the present invention by using the drawings.

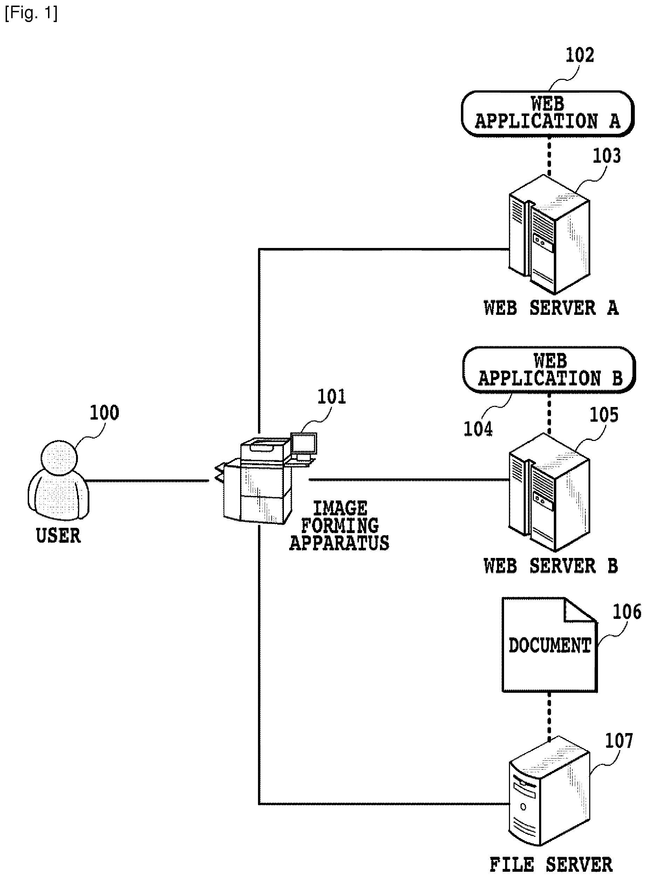

Fig. 1 is a system configuration diagram showing an exemplar configuration of the whole system of the present invention.

A system of the present embodiment is configured of an image forming apparatus 101, a web server A 103 in which a web application A 102 is installed, a web server B 105 in which a web application B 104 is installed, and a file server 107 in which a document 106 is installed. The components are connected to each other via a network.

A user 100 can use the web applications A 102 and B 104 by operating the image forming apparatus 101. For example, a tab browser is installed in the image forming apparatus 101, and the tab browser displays a user interface screen for a job such as "print" on a display of the image forming apparatus by communicating with a web server. Then, when the user 100 instructs assignment of the job through the user interface screen, the job is forwarded from the web application A 102 stored in the web server A 103 to the image forming apparatus 101, for example. According to the forwarded job, the image forming apparatus 101 executes "print" processing, for example. Thus, the web applications A 102 and B 104 are capable of instructing the image forming apparatus 101 to execute jobs such as a scan job and a print job. In addition, according to a job assigned by a web application, the image forming apparatus 101 can upload the document 106 to the file server 107 (send job). Further, the image forming apparatus 101 can print the document 106 on the file server 107 (print job).

As has been described, a web application is installed outside the image forming apparatus 101. The image forming apparatus 101 uses a web browser as an interface for using the web application. In the present embodiment, multiple web browsers are used, and a tab browser is employed. In the tab browser, a web browser to be displayed in the frontmost side of a display screen for displaying a browser (hereinafter referred to as "browser display screen") can be switched among the multiple web browsers, by pressing a tab in the browser screen. A tab browser enables alternative selection and display of screens related respectively to multiple web applications which are generated on the basis of HTML (Hypertext Markup Language) files received from a server, for example.

When the above-mentioned web application A 102 is to be used, for example, a screen corresponding to the web application A 102 can be displayed in the frontmost side of the browser display screen by selecting a tab A in the web browser display screen. Specifically, a first screen corresponding to a first web application can be displayed.

Similarly, when the web application B 104 is to be used, a screen corresponding to the web application B 104 can be displayed in the frontmost side of the browser display screen by selecting a tab B in the web browser display screen.

Incidentally, the components of the system may be connected by either wired or wireless connection. The image forming apparatus 101 only needs to be capable of displaying a screen related to a web application and of executing a job using a document, and thus is not limited to an MFP or an LBP. Each of the web servers A 103 and B 105 only needs to include a function of executing a web application, and thus various information terminal devices may be used in addition to a PC. The file server 107 only needs to include a function of stocking document data, and thus is not limited to a PC. Although Fig. 1 shows an example of installing multiple servers each executing different processing, the functions may be implemented by a single server, as a matter of course.

In addition, multiple web servers or file servers need not be connected to the image forming apparatus 101. It suffices that a single web server or a single file server is connected to the image forming apparatus 101, and multiple web applications with different URLs are connected to the server.

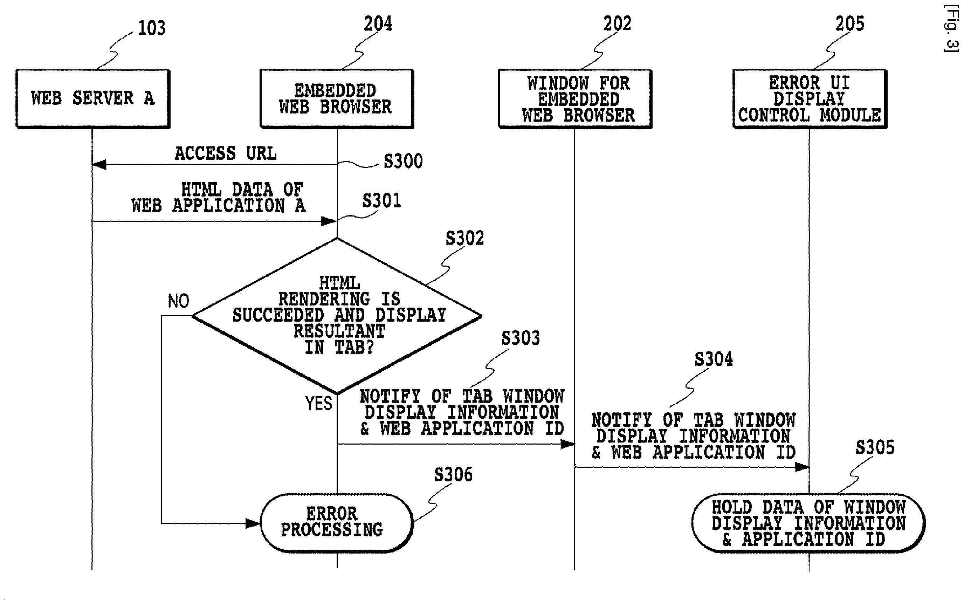

The basic operation of the system can be divided mainly into two flows which are display of a web application and control of displaying an error screen during execution of a job. These will be described later with reference to the flowcharts in Fig. 3 and subsequent drawings.

### <Device Configuration>

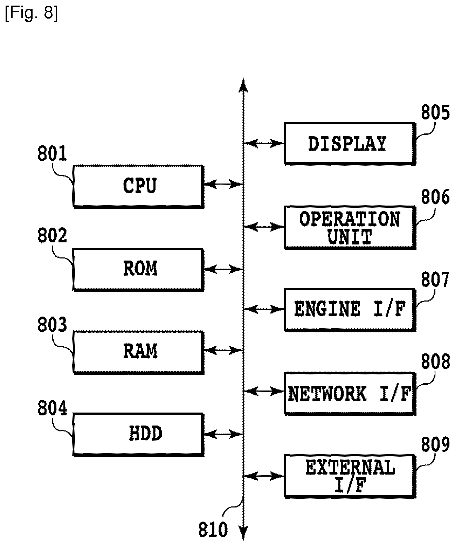

Fig. 8 is a block diagram illustrating a basic configuration of the image forming apparatus that implements an embodiment of the present invention. The image forming apparatus implementing an embodiment of the present invention includes a CPU 801, a ROM 802, a RAM 803, an HDD 804, a display 805, an operation unit 806, an engine I/F 807, a network I/F 808, an external I/F 809 and a system bus 810.

Details of the above configuration are as follows. The CPU 801 is a central processor that performs overall control of the device, calculation processing and the like. The CPU 801 executes later-described processing in accordance with a program stored in the ROM 802. The ROM 802 is a read-only memory and is a region for storing a system boot program, a program for controlling a printer engine, a tab browser program and the like. In addition, programs and the like for displaying an error screen and controlling such an operation are also stored in the ROM 802. The RAM 803 is a random access memory for temporarily storing pieces of information such as information for displaying a screen related to a web application received from a server. The HDD 804 is configured of a hard disk, for example, and is used to spool data; to store programs, information files, image data and the like; or used as a work area. The display 805 is a liquid crystal display, for example, and is used to display settings of the device, processing currently performed in the device, an error state and the like. The operation unit 806 is used to change settings, to assign a job and to do the like, and can be operated through a UI screen or the like displayed on the display 805. The engine I/F 807 is a part through which commands for controlling the printer engine and the like are actually exchanged. The network I/F 808 is provided to connect the image forming apparatus to a network. The external I/F 809 is provided to connect an external device through an interface such as a parallel (or serial) interface. The system bus 810 functions as a data path among the above components.

### <Configuration of Software Module>

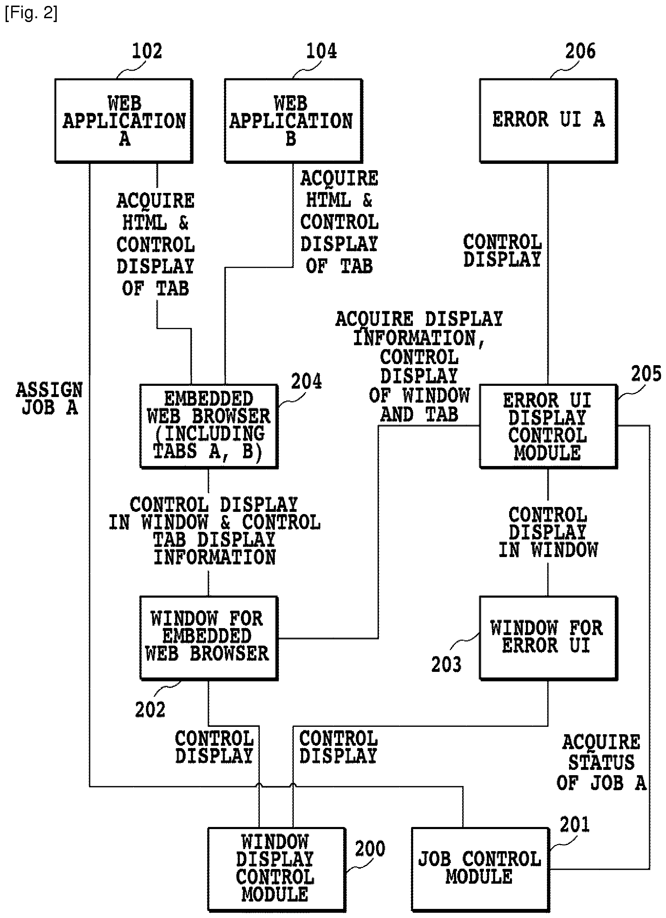

Fig. 2 is an exemplar configuration diagram of software inside the image forming apparatus 101 of the present invention. The CPU 801 of the image forming apparatus 101 reads and executes a program stored in the ROM 802 or RAM 803 to run each part of software shown in Fig. 2.

A window display control module 200 can control a window on a screen shown on the user interface (UI) of the display 805 of the image forming apparatus 101. Actual examples of the window to be controlled include: a window for embedded web browser 202 that displays an embedded web browser 204 stored in the ROM 802; and a window for error UI 203 that displays an error screen when an error occurs. The window for embedded web browser 202 has control of display in a window of the embedded web browser 204, and has control of tab display information. Control of tab display information means, for example, performing control to receive information indicating that the embedded web browser 204 is displayed in the frontmost side on the display screen, or information indicating which tab is displayed in association with which application. Control of display in a window (hereinafter referred to as "in-window display control") means, for example, performing control to display a screen of the web browser 204 on a window displayed on the display 805. Moreover, in-window display control includes, for example, performing control to switch the window screen to be displayed, upon receipt of information from the embedded web browser 204 indicating that the user presses a tab. In-window display control further includes, as will be described later, performing control to display a screen of the web browser 204 when an error is cleared, in a state where an error screen had been displayed by an error UI display control module 205. The embedded web browser 204 is capable of communicating with the web applications A 102 and B 104 to acquire HTML data, perform rendering on the HTML data, and control display of tabs. To control display of tabs means, for example, sending a notification to the window of embedded web browser 202 to control switching of windows when the user presses a tab.

The web application A 102 may remotely assign a job A to a job control module 201 via a network. A job refers to an instruction for executing a function of the image forming apparatus. Examples of a job include "copy", "scan", and "print". The present embodiment describes an example of performing control in displaying an error screen in a case where the image forming apparatus receives a job from outside such as from a web application, and executes the job accordingly, and an error occurs during execution of the job. Details will be described later.

The window for error UI 203 has in-window display control of the error UI display control module 205 that controls display of an error UI A 206. To be specific, upon occurrence of an error, the window for error UI 203 performs control to display an error screen corresponding to the error, in the window. The error UI A 206 is an interface including an error screen that indicates that an error has occurred. Incidentally, the error UI A 206 may be stored in an externally-connected storage, or may be acquired from a server via a network.

The error UI display control module 205 is capable of communicating with the window for embedded web browser 202 to acquire information related to a group of web applications displayed on the embedded web browser 204, or to perform display control thereof. For example, the error UI display control module 205 may acquire information indicating that a screen displayed by a browser is shown on the frontmost side on the display screen of the display 805, acquire application identification information, and perform control to display an error screen in a certain case. The error UI display control module 205 is also capable of acquiring a status of the job A from the job control module 201. For example, the error UI display control module 205 may acquire a status indicating that an error occurs while executing the job A, or a status indicating that execution of the job A succeeds. Alternatively, the error UI display control module 205 may acquire a status indicating clearance of an error having occurred in relation to the job A.

### <Flow of Processing>

Fig. 3 is a flowchart showing an example of the present embodiment. Fig. 3 shows an example in which a web application is displayed on the embedded web browser 204. Specifically, Fig. 3 shows an exemplar status where no error occurs in a job. By using Fig. 3, a description will be given of a process flow by the system described in Figs. 1 and 2, from displaying a web application on the embedded web browser 204, to storing information on the web application in the error UI display control module 205. Application identification information forwarded to the error UI display control module 205 is used in controlling display of an error screen upon occurrence of an error.

Firstly, the user 100 operates the embedded web browser 204 in the image forming apparatus 101, so that the embedded web browser 204 accesses a URL of the web server A 103 in S300. Then in S301, the web server A 103 forwards HTML data of a web application A to the embedded web browser 204. Note that the web application in this case may be an application related to a job of the image forming apparatus as described above, or may be equivalent to a certain page of a general website. In S302, the embedded web browser 204 renders the received HTML data and displays the resultant data on its tab window. If the rendering succeeds, the flow proceeds to S303. If the rendering fails, the flow proceeds to S306 to perform error processing.

In S303, the embedded web browser 204 notifies the window for embedded web browser 202 of information on display of a tab window, and of an ID of the displayed web application A 102 (web application identification information). That is, the embedded web browser 204 functions as web application identification information notification unit. The information to be notified here is information indicating which application is displayed in association with which tab, among the tabs used in the web browser. In S304, as similar to the processing in S303, the window for embedded web browser 202 notifies the error UI display control module 205 of the information on display of the tab window and the ID of the displayed web application A 102. In S305, the error UI display control module 205 holds and manages the information on display of the tab window and the ID of the web application A 102, and the processing is terminated.

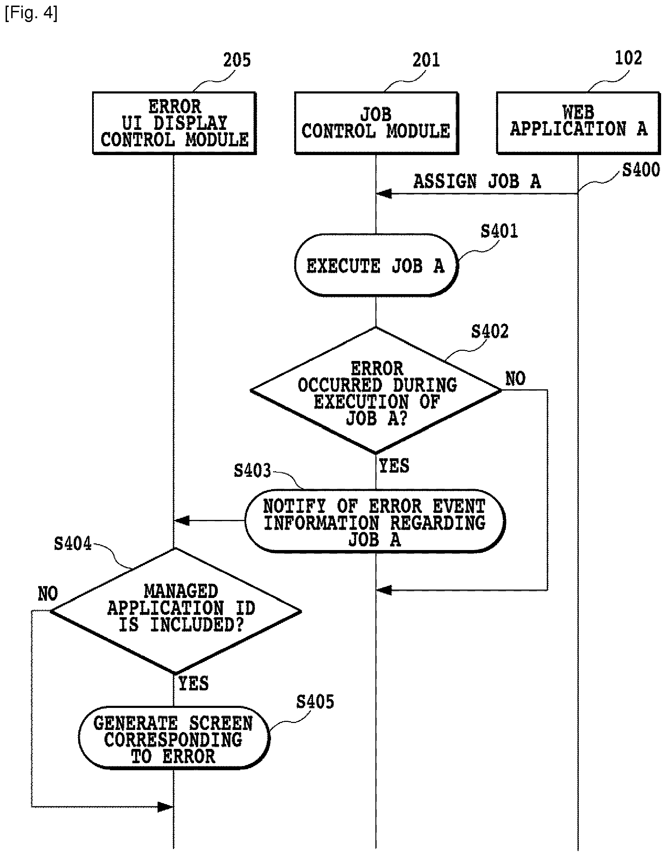

Fig. 4 is a flowchart of the present embodiment. By using Fig. 4, a description will be given of a process flow by the system described in Figs. 1 and 2, from assigning a job of a web application, to generating an error screen.

The user 100 operates the web application A 102 displayed on the embedded web browser 204 in the image forming apparatus 101, so that the job A is assigned in S400. Details of S400 are as follows. The user 100 operates a user interface on the screen of the web application A 102 displayed on the web browser 204, and inputs an instruction for assigning the job A. In response, the server storing the web application A 102 assigns the job A to the image forming apparatus, and thus execution of the job is requested.

In S401, the job control module 201 executes the job A. If an error occurs while the job control module 201 executes the job A in S402, the flow proceeds to S403, whereas if not, the processing is terminated. In S403, the job control module 201 notifies the error UI display control module 205 of error event information on the job A. The error event information includes identification information on the assigned web application (web application ID), type of job, and type of error, for example. Hence, the job control module 201 functions as error detection unit for detecting occurrence of an error. Incidentally, various conventional techniques may be applied as the method for detecting occurrence of an error, and thus the description thereof is omitted here.

In S404, the error UI display control module 205 compares information stored therein (information on display of tab windows, web application IDs and the like) with error event information (web application ID, type of job, type of error, and the like). By comparing the pieces of information, the error UI display control module 205 determines whether or not a managed application ID is included in the error event information. In other words, the error UI display control module 205 determines whether or not a screen related to the web application is successfully displayed, and whether or not an error occurs in the job assigned by this web application. If a managed application ID is included in the error event information as a result of the determination, the flow proceeds to S405. If not, the processing is terminated. In S405, the error UI display control module 205 generates an error screen corresponding to the error that has occurred, and the processing is terminated. To be specific, the error UI display control module 205 performs control to display an error screen according to the error type included in the error event information, instead of the window screen on which the web application is loaded. Hence, when a certain error occurs, an error screen thereof is displayed on the window screen to attract the user's attention.

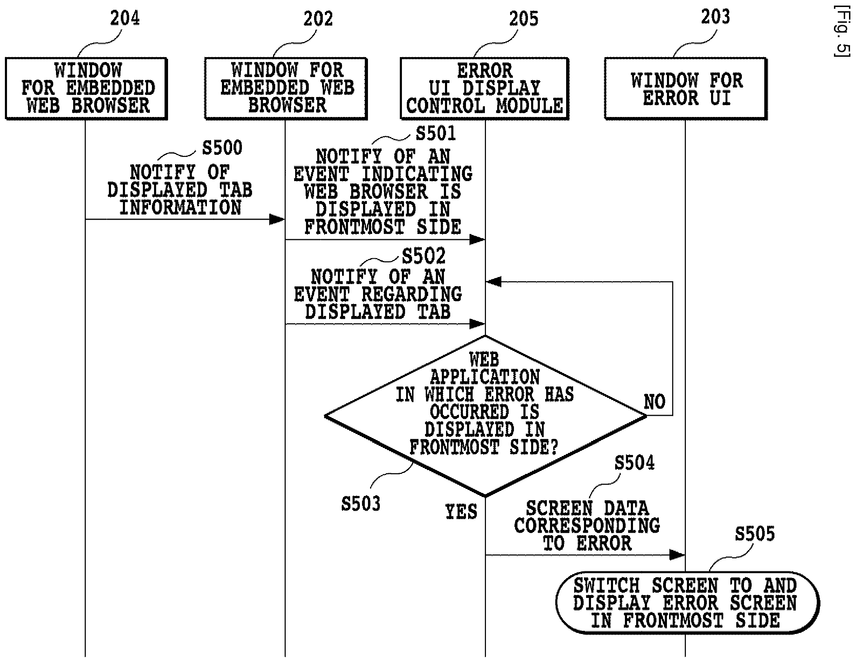

Fig. 5 is a flowchart of the present embodiment. By using Fig. 5, a description will be given of a process flow by the system described in Figs. 1 and 2, until a browser screen is switched to and display an error screen when a web application is displayed in the frontmost side on the display screen of the browser screen. Specifically, described is a flow of processing of determining whether or not to display an error screen when a screen of a web application irrelevant to an error having occurred is switched by a tab.

The user 100 operates the embedded web browser 204 in the image forming apparatus 101, so that the web application A 102 is displayed in the frontmost side on the display screen of the browser screen. In S500, the embedded web browser 204 notifies the window for embedded web browser 202 of information that identifies the tab window currently displayed in the frontmost side on the display screen of the window for embedded web browser 202 (displayed-tab information). The displayed-tab information includes an application ID for identifying a web application displayed in a window of a tab.

In S501, the window for embedded web browser 202 forwards, to the error UI display control module 205, an event notification indicating that the embedded web browser 204 is displayed in the frontmost side on the display screen. At the same time, in S502, the window for embedded web browser 202 also forwards an event notification including information on the tab displayed in the frontmost side on the display screen (displayed-tab information). In S503, the error UI display control module 205 compares the information stored therein, which is notified in S305, with the information included in the event notification received in S501 and S502, and determines whether or not a managed application ID is included in the information in the event notification. If so, the flow proceeds to S504. If not, the processing is terminated. In S504, the error UI display control module 205 forwards error screen data corresponding to the error, which is generated in advance, to the window for error UI 203. In S505, the window for error UI 203 displays the received error screen in the frontmost side on the display screen of the UI, and the processing is terminated.

In Fig. 5, an example has been described where control is performed to switch the screen to the error screen, by exchanging information between the window for embedded web browser 202 and the error UI display control module 205. However, note that the window display control module 200 shown in Fig. 2 may perform control in switching the displayed window screens instead.

By performing the above processing, an error screen can be displayed only when a certain web application is displayed in the frontmost side on the display screen of a window, the certain web application being the web application that assigns a job in which an error occurs. Accordingly, even when an error occurs, an error screen can be controlled not to be displayed to a user using, by tab switching or the like, an application irrelevant to the error. Thus, convenience in user operability is improved.

In the above description, an error screen of an application displayed in the "frontmost side on the display screen" of a window has been described as an example. Note that in the present embodiment, "frontmost side on the display screen" refers to, among multiple screens displayed in a superimposed manner on a browser screen, a screen displayed nearest to the user on top of and to cover the other screens. However, the present embodiment is not limited to the "frontmost side on the display screen". It is sufficient that the user be freed from irritation by lowered operability, due to displaying of an error screen when he/she uses a web application irrelevant to the error, the error being related to a job assigned by use of a web browser. For example, even in a case where a web application screen is displayed in a part of the window screen along with another local application, it is within the scope of the present embodiment to perform control so that an error screen is not displayed on the web application screen.

Moreover, when a user uses a web application irrelevant to an error that is related to a job assigned by use of a web browser, the error screen may be displayed in a simple form in a part of the window screen instead of being completely shut off from the frontmost side on the display screen. For example, the error screen may be displayed to overlap a small portion in the frontmost side on the display screen, such as in the form of a pop-up window. Otherwise, the error screen may be displayed transparently in the frontmost side on the display screen.

Specifically, when an error is displayed, a "second error screen" different from a "first error screen" may be generated by editing the "first error screen," and be displayed on a display screen. Here, the "first error screen" is the screen displayed on the display screen when an application related to the error is selectively displayed.

In addition, the amount of data required to display this second error screen is smaller than that to display the first error screen.

Hereinabove, a description has been given of controlling display of an error screen when a web application having assigned a job is displayed in the frontmost side on the display screen. However, control may be performed otherwise so that when a screen of a different web application which is also influenced by occurrence of an error in the assigned job is selected and displayed, the error screen may be similarly displayed regardless of whether or not the different web application assigns the job. For example, when an error occurs in an ink tank while executing a "copy" job in the image forming apparatus, the error screen is similarly displayed if a web application related to "print" in addition to "copy" is selected on the web browser. Meanwhile, control may be performed not to display the error screen when a web application related to "scan" is selected on the web browser. Such control can be performed by causing the error UI display control module 205 to manage application IDs and types of errors that influence applications identifiable with these application IDs. For example, the error UI display control module 205 compares information managed therein with error types notified through event notifications from the job control module 201. Then, when a selection is made to display an application ID associated with an error type which is influenced by an error, control is performed to display an error screen even on a screen of an application that has not assigned the job.

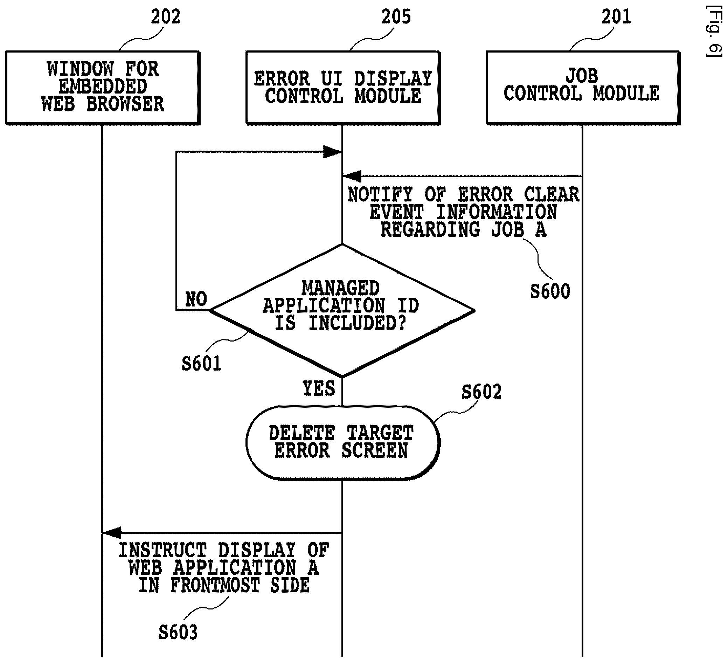

Fig. 6 is a flowchart of the present invention. By using Fig. 6, a description will be given of a process flow by the system described in Figs. 1 and 2, until a web application is displayed in the frontmost side on the display screen after an error is cleared and its error screen disappears.

When an error having occurred in the image forming apparatus 101 is cleared, in S600, the job control module 201 notifies the error UI display control module 205 of event information indicating that the error in the job A is cleared (hereinafter referred to as "error clear event information"). That is, the job control module 201 functions as error clear notification unit. In S601, the error UI display control module 205 compares information held therein with the error clear event information and determines whether or not a managed application ID is included in the error clear event information. If so, the flow proceeds to S602. If not, the processing is terminated. Incidentally, various conventional techniques may be applied as the method for recognizing that an error is cleared, and thus the description thereof is omitted here.

In S602, the error UI display control module 205 performs delete processing of the target error screen that had been displayed, and the flow proceeds to S603. In S603, the error UI display control module 205 instructs the window for embedded web browser 202 to display, in the frontmost side on the display screen, the web application A 102 associated with the job A in which the error has occurred. Then, the processing is terminated.

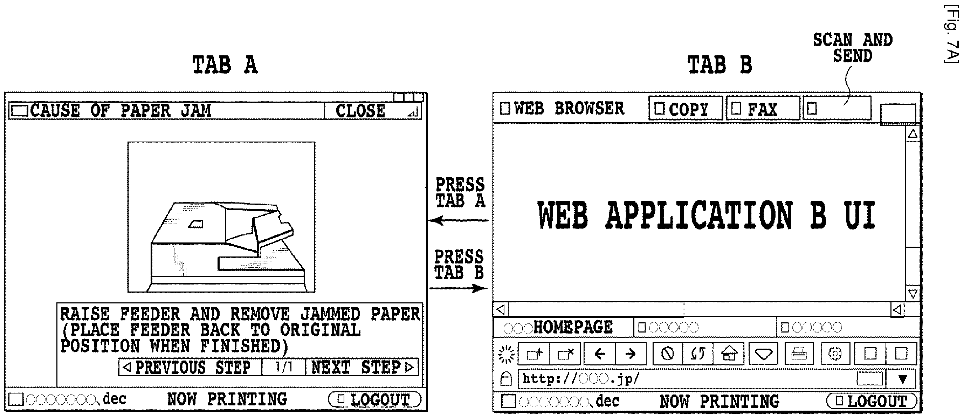

According to the present embodiment, in a state where multiple web applications are displayed on the embedded web browser 204 in the image forming apparatus 101, usability in displaying an error screen is improved when an error occurs during execution of a job assigned by a web application. Specifically, display of an error screen can be optimally controlled for each web application displayed in the frontmost side on the display screen, such as displaying an error screen only on a web application related to the error, as in Fig. 7A. Hence, convenience in operability for a user is improved. An example is shown in Fig. 7A, where an error screen is displayed on a web application displayed in association with tab A, whereas the error screen is not displayed on another web application displayed in association with tab B.

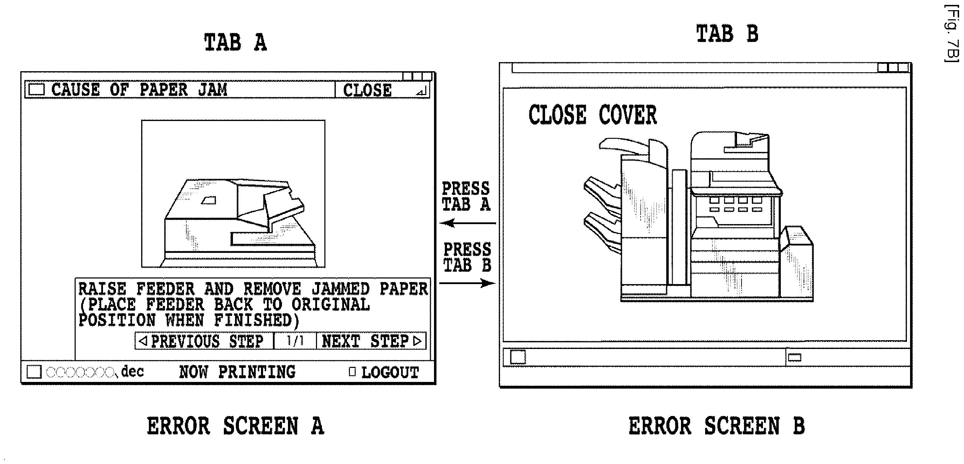

Incidentally, although an example has been described above where only one error occurs, the same processing can be performed when multiple errors occur. In such a case, as shown in Fig. 7B for example, each tab may be pressed to display an error screen of a corresponding error. In Fig. 7B, an error screen indicating that a paper jam has occurred is shown in a web application displayed in association with tab A, whereas an error screen indicating that a cover is left open is shown in a web application displayed in association with tab B. For example, by referring to predetermined settings in which error types and applications influenced by the errors are associated with each other, an error screen corresponding to each error can be displayed by switching tabs.

Although a description has been given above by taking an image forming apparatus as an example, the present invention may otherwise be configured by using an information processing apparatus. For example, the present invention may be configured by using an apparatus that exchanges information with a server and an image forming apparatus, and that has a browser function installed therein for assigning a web application or displaying a screen related to a web application.

### <Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus that communicates with an external apparatus connected thereto via a network, and that receives a request from a web application installed in the external apparatus, and that executes processing in accordance with the request, the information processing apparatus comprising:
a display unit for generating a screen corresponding to each of a plurality of web applications, and for displaying in the frontmost side on a display screen a first screen selected from among the screens and corresponding to a first web application that is configured to request execution of a job by the information processing apparatus;
a determination unit for determining, upon occurrence of an error during execution of the job instructed through the first web application among the web applications, whether or not the first screen corresponding to the first web application is displayed in the frontmost side on the display screen of the display unit; and
a control unit for controlling the display unit so that
when the determination unit determines that the first screen is displayed in the frontmost side on the display screen, the display unit displays a first error screen for notification of the error in the frontmost side on the display screen, and
when the determination unit determines that the first screen is not displayed in the frontmost side on the display screen, the display unit does not display the first error screen in the frontmost side on the display screen.

2. The information processing apparatus according to claim 1, wherein the control unit controls the display unit so that
when the determination unit determines that the first screen is not displayed in the frontmost side on the display screen, the display unit generates a second error screen different from the first error screen by editing the first error screen to display the second error screen in the frontmost side on the display screen.

3. The information processing apparatus according to claim 2, wherein the display unit displays the second error screen with a smaller amount of data than for displaying the first error screen.

4. The information processing apparatus according to claim 1, further comprising a notification unit for notification of web application identification information when a screen corresponding to a web application is displayed by the display unit, the web application identification information identifying the web application, wherein
the control unit determines, by use of the application identification information notified by the notification unit, whether or not the error of the job is an error related to the web application identified by the web application identification information, and if the error is the error related to the web application identified by the web application identification information as a result of the determination, the control unit displays the first error screen in the frontmost side on the display screen.

5. The information processing apparatus according to claim 2, further comprising a notification unit for notification of web application identification information when a screen corresponding to a web application is displayed by the display unit, the web application identification information identifying the web application, wherein
the control unit determines, by use of the application identification information notified by the notification unit, whether or not the error of the job is an error related to the web application identified by the web application identification information, and if the error is the error related to the web application identified by the web application identification information as a result of the determination, the control unit displays the second error screen in the frontmost side on the display screen.

6. The information processing apparatus according to claim 1, further comprising an error clear notification unit for notification of clearance of the error, wherein
the control unit performs control so that the first error screen for notification of the error notified by the error clear notification unit is not displayed on a screen.

7. The information processing apparatus according to claim 2, further comprising an error clear notification unit for notification of clearance of the error, wherein
the control unit performs control so that the second error screen for notification of the error notified by the error clear notification unit is not displayed on a screen.

8. The information processing apparatus according to claim 1, wherein
the display unit is a tab browser that displays screens corresponding to the plurality of web applications on top of one another, and displays a screen corresponding to a selected tab in the frontmost side on the display screen of the display unit.

9. An information processing method for an information processing apparatus that communicates with an external apparatus connected thereto via a network, and that receives a request from a web application installed in the external apparatus, and that executes processing in accordance with the request, and includes a display unit for generating a screen corresponding to each of a plurality of web applications, and for displaying in the frontmost side on a display screen a first screen selected from among the screens and corresponding to a first web application that is configured to request execution of a job by the information processing apparatus , the control method comprising the steps of:
determining, upon occurrence of an error during execution of the job instructed through the first web application among the web applications, whether or not the first screen corresponding to the first web application is displayed in the frontmost side on the display screen of the display unit; and
controlling the display unit so that
when it is determined in the determining step that the first screen is displayed in the frontmost side on the display screen, the display unit displays a first error screen for notification of the error in the frontmost side on the display screen, and
when it is determined in the determining step that that the first screen is not displayed in the frontmost side on the display screen, the display unit does not display the first error screen in the frontmost side on the display screen.

10. A program for causing a computer to execute the control method for the information processing apparatus according to claim 9.

## Patentansprüche

1. Informationsverarbeitungsvorrichtung, die mit einer damit verbundenen externen Vorrichtung mittels eines Netzwerks kommuniziert, und die eine Anforderung von einer bei der externen Vorrichtung installierten Netzwerkapplikation empfängt, und die eine Verarbeitung gemäß der Anforderung ausführt, wobei die Informationsverarbeitungsvorrichtung aufweist:
eine Anzeigeeinheit zur Erzeugung eines Bildschirms entsprechend jeder aus einer Vielzahl von Netzwerkapplikationen und zur Anzeige eines ersten Bildschirms, der unter den Bildschirmen ausgewählt ist und einer ersten Netzwerkapplikation entspricht, die dazu eingerichtet ist, um eine Ausführung eines Auftrags durch die Informationsverarbeitungsvorrichtung anzufordern, in der vordersten Seite auf einem Anzeigebildschirm,
eine Bestimmungseinheit zur Bestimmung, bei Auftreten eines Fehlers während einer Ausführung des mittels der ersten Netzwerkapplikation unter den Netzwerkapplikationen angewiesenen Auftrags, ob der erste Bildschirm entsprechend der ersten Netzwerkapplikation in der vordersten Seite auf dem Anzeigebildschirm der Anzeigeeinheit angezeigt ist oder nicht, und
eine Steuereinheit zur Steuerung der Anzeigeeinheit derart, dass
wenn die Bestimmungseinheit bestimmt, dass der erste Bildschirm in der vordersten Seite auf dem Anzeigebildschirm angezeigt ist, die Anzeigeeinheit einen ersten Fehlerbildschirm zur Benachrichtigung des Fehlers in der vordersten Seite auf dem Anzeigebildschirm anzeigt, und
wenn die Bestimmungseinheit bestimmt, dass der erste Bildschirm nicht in der vordersten Seite auf dem Anzeigebildschirm angezeigt ist, die Anzeigeeinheit den ersten Fehlerbildschirm nicht in der vordersten Seite auf dem Anzeigebildschirm anzeigt.

2. Informationsverarbeitungsvorrichtung nach Anspruch 1, wobei die Steuereinheit die Anzeigeeinheit derart steuert, dass
wenn die Bestimmungseinheit bestimmt, dass der erste Bildschirm nicht in der vordersten Seite auf dem Anzeigebildschirm angezeigt ist, die Anzeigeeinheit einen zweiten Fehlerbildschirm verschieden von dem ersten Fehlerbildschirm durch Bearbeiten des ersten Fehlerbildschirms erzeugt, um den zweiten Fehlerbildschirm in der vordersten Seite auf dem Anzeigebildschirm anzuzeigen.

3. Informationsverarbeitungsvorrichtung nach Anspruch 2, wobei die Anzeigeeinheit den zweiten Fehlerbildschirm mit einem kleineren Ausmaß an Daten als zur Anzeige des ersten Fehlerbildschirms anzeigt.

4. Informationsverarbeitungsvorrichtung nach Anspruch 1, ferner mit einer Benachrichtigungseinheit zur Benachrichtigung von Netzwerkapplikationsidentifikationsinformation, wenn ein Bildschirm entsprechend einer Netzwerkapplikation durch die Anzeigeeinheit angezeigt ist, wobei die Netzwerkapplikationsidentifikationsinformation die Netzwerkapplikation identifiziert, wobei
die Steuereinheit unter Verwendung der durch die Benachrichtigungseinheit benachrichtigten Applikationsidentifikationsinformation bestimmt, ob der Fehler des Auftrags ein mit der durch die Netzwerkapplikationsidentifikationsinformation identifizierten Netzwerkapplikation verbundener Fehler ist oder nicht, und wenn der Fehler als ein Ergebnis der Bestimmung der mit der durch die Netzwerkapplikationsidentifikationsinformation identifizierten Netzwerkapplikation verbundene Fehler ist, die Steuereinheit den ersten Fehlerbildschirm in der vordersten Seite auf dem Anzeigebildschirm anzeigt.

5. Informationsverarbeitungsvorrichtung nach Anspruch 2, ferner mit einer Benachrichtigungseinheit zur Benachrichtigung von Netzwerkapplikationsidentifikationsinformation, wenn ein Bildschirm entsprechend einer Netzwerkapplikation durch die Anzeigeeinheit angezeigt ist, wobei die Netzwerkapplikationsidentifikationsinformation die Netzwerkapplikation identifiziert, wobei
die Steuereinheit unter Verwendung der durch die Benachrichtigungseinheit benachrichtigten Applikationsidentifikationsinformation bestimmt, ob der Fehler des Auftrags ein mit der durch die Netzwerkapplikationsidentifikationsinformation identifizierten Netzwerkapplikation verbundener Fehler ist oder nicht, und wenn der Fehler als ein Ergebnis der Bestimmung der mit der durch die Netzwerkapplikationsidentifikationsinformation identifizierten Netzwerkapplikation verbundene Fehler ist, die Steuereinheit den zweiten Fehlerbildschirm in der vordersten Seite auf dem Anzeigebildschirm anzeigt.

6. Informationsverarbeitungsvorrichtung nach Anspruch 1, ferner mit einer Fehlerbeseitigungsbenachrichtigungseinheit zur Benachrichtigung einer Beseitigung des Fehlers, wobei
die Steuereinheit eine Steuerung derart durchführt, dass der erste Fehlerbildschirm zur Benachrichtigung des durch die Fehlerbeseitigungsbenachrichtigungseinheit benachrichtigten Fehlers nicht auf einem Bildschirm angezeigt ist.

7. Informationsverarbeitungsvorrichtung nach Anspruch 2, ferner mit einer Fehlerbeseitigungsbenachrichtigungseinheit zur Benachrichtigung einer Beseitigung des Fehlers, wobei
die Steuereinheit eine Steuerung derart durchführt, dass der zweite Fehlerbildschirm zur Benachrichtigung des durch die Fehlerbeseitigungsbenachrichtigungseinheit benachrichtigten Fehlers nicht auf einem Bildschirm angezeigt ist.

8. Informationsverarbeitungsvorrichtung nach Anspruch 1, wobei
die Anzeigeeinheit eine Registerreiterdurchblättereinrichtung ist, die Bildschirme entsprechend der Vielzahl von Netzwerkapplikationen übereinander anzeigt, und die einen Bildschirm entsprechend eines ausgewählten Registerreiters in der vordersten Seite auf dem Anzeigebildschirm der Anzeigeeinheit anzeigt.

9. Informationsverarbeitungsverfahren für eine Informationsverarbeitungsvorrichtung, die mit einer damit verbundenen externen Vorrichtung mittels eines Netzwerks kommuniziert, und die eine Anforderung von einer bei der externen Vorrichtung installierten Netzwerkapplikation empfängt, und die eine Verarbeitung gemäß der Anforderung ausführt, und die eine Anzeigeeinheit umfasst zur Erzeugung eines Bildschirms entsprechend jeder aus einer Vielzahl von Netzwerkapplikationen und zur Anzeige eines ersten Bildschirms, der unter den Bildschirmen ausgewählt ist und einer ersten Netzwerkapplikation entspricht, die dazu eingerichtet ist, um eine Ausführung eines Auftrags durch die Informationsverarbeitungsvorrichtung anzufordern, in der vordersten Seite auf einem Anzeigebildschirm, wobei das Steuerverfahren die folgenden Schritte aufweist:
ein Bestimmen, bei Auftreten eines Fehlers während einer Ausführung des mittels der ersten Netzwerkapplikation unter den Netzwerkapplikationen angewiesenen Auftrags, ob der erste Bildschirm entsprechend der ersten Netzwerkapplikation in der vordersten Seite auf dem Anzeigebildschirm der Anzeigeeinheit angezeigt wird oder nicht, und
ein Steuern der Anzeigeeinheit derart, dass
wenn in dem Bestimmungsschritt bestimmt wird, dass der erste Bildschirm in der vordersten Seite auf dem Anzeigebildschirm angezeigt wird, die Anzeigeeinheit einen ersten Fehlerbildschirm zur Benachrichtigung des Fehlers in der vordersten Seite auf dem Anzeigebildschirm anzeigt, und
wenn in dem Bestimmungsschritt bestimmt wird, dass der erste Bildschirm nicht in der vordersten Seite auf dem Anzeigebildschirm angezeigt wird, die Anzeigeeinheit den ersten Fehlerbildschirm nicht in der vordersten Seite auf dem Anzeigebildschirm anzeigt.

10. Programm, um einen Computer dazu zu bringen, das Steuerverfahren für die Informationsverarbeitungsvorrichtung nach Anspruch 9 auszuführen.

## Revendications

1. Appareil de traitement d'informations qui communique avec un appareil externe relié à celui-ci via un réseau, et qui reçoit une demande provenant d'une application Web installée dans l'appareil externe, et qui exécute un traitement conformément à la demande, l'appareil de traitement d'informations comprenant :
une unité d'affichage pour générer un écran correspondant à chacune d'une pluralité d'applications Web, et pour afficher, dans le côté le plus en avant sur un écran d'affichage, un premier écran sélectionné parmi les écrans et correspondant à une première application Web qui est configurée pour demander l'exécution d'une tâche par l'appareil de traitement d'informations ;
une unité de détermination pour déterminer, lors de l'apparition d'une erreur au cours de l'exécution de la tâche ordonnée par la première application Web parmi les applications Web, si le premier écran correspondant à la première application Web est affiché ou non dans le côté le plus en avant sur l'écran d'affichage de l'unité d'affichage ; et
une unité de commande pour commander l'unité d'affichage de sorte que :
lorsque l'unité de détermination détermine que le premier écran est affiché dans le côté le plus en avant sur l'écran d'affichage, l'unité d'affichage affiche un premier écran d'erreur pour la notification de l'erreur dans le côté le plus en avant sur l'écran d'affichage, et
lorsque l'unité de détermination détermine que le premier écran n'est pas affiché dans le côté le plus en avant sur l'écran d'affichage, l'unité d'affichage n'affiche pas le premier écran d'erreur dans le côté le plus en avant sur l'écran d'affichage.

2. Appareil de traitement d'informations selon la revendication 1, dans lequel l'unité de commande commande l'unité d'affichage de sorte que :
lorsque l'unité de détermination détermine que le premier écran n'est pas affiché dans le côté le plus en avant sur l'écran d'affichage, l'unité d'affichage génère un deuxième écran d'erreur différent du premier écran d'erreur en éditant le premier écran d'erreur pour afficher le deuxième écran d'erreur dans le côté le plus en avant sur l'écran d'affichage.

3. Appareil de traitement d'informations selon la revendication 2, dans lequel l'unité d'affichage affiche le deuxième écran d'erreur avec une plus petite quantité de données que celle utilisée pour afficher le premier écran d'erreur.

4. Appareil de traitement d'informations selon la revendication 1, comprenant en outre une unité de notification pour la notification d'informations d'identification d'application Web lorsqu'un écran correspondant à une application Web est affiché par l'unité d'affichage, les informations d'identification d'application Web identifiant l'application web, dans lequel :
l'unité de commande détermine, par l'utilisation des informations d'identification d'application notifiées par l'unité de notification, si l'erreur de la tâche est une erreur relative à l'application Web identifiée par les informations d'identification d'application Web ou non, et si l'erreur est l'erreur relative à l'application Web identifiée par les informations d'identification d'application Web suite à la détermination, l'unité de commande affiche le premier écran d'erreur dans le côté le plus en avant sur l'écran d'affichage.

5. Appareil de traitement d'informations selon la revendication 2, comprenant en outre une unité de notification pour la notification d'informations d'identification d'application Web lorsqu'un écran correspondant à une application Web est affiché par l'unité d'affichage, les informations d'identification d'application Web identifiant l'application Web, dans lequel :
l'unité de commande détermine, par l'utilisation des informations d'identification d'application notifiées par l'unité de notification, si l'erreur de la tâche est une erreur relative à l'application Web identifiée par les informations d'identification d'application Web ou non, et, si l'erreur est l'erreur relative à l'application Web identifiée par les informations d'identification d'application Web suite à la détermination, l'unité de commande affiche le deuxième écran d'erreur dans le côté le plus en avant sur l'écran d'affichage.

6. Appareil de traitement d'informations selon la revendication 1, comprenant en outre une unité de notification de correction d'erreur pour la notification de la correction de l'erreur, dans lequel :
l'unité de commande effectue une commande de sorte que le premier écran d'erreur pour la notification de l'erreur notifiée par l'unité de notification de correction d'erreur ne soit pas affiché sur un écran.

7. Appareil de traitement d'informations selon la revendication 2, comprenant en outre une unité de notification de correction d'erreur pour la notification de la correction de l'erreur, dans lequel :
l'unité de commande effectue une commande de sorte que le deuxième écran d'erreur pour la notification de l'erreur notifiée par l'unité de notification de correction d'erreur ne soit pas affiché sur un écran.

8. Appareil de traitement d'informations selon la revendication 1, dans lequel :
l'unité d'affichage est un navigateur à onglets qui affiche des écrans correspondant à la pluralité d'applications Web les uns sur les autres, et affiche un écran correspondant à un onglet sélectionné dans le côté le plus en avant sur l'écran d'affichage de l'unité d'affichage.

9. Procédé de traitement d'informations pour un appareil de traitement d'informations qui communique avec un appareil externe relié à celui-ci via un réseau, et qui reçoit une demande provenant d'une application Web installée dans l'appareil externe, et qui exécute un traitement conformément à la demande, et comporte une unité d'affichage pour générer un écran correspondant à chacune d'une pluralité d'applications Web, et pour afficher, dans le côté le plus en avant sur un écran d'affichage, un premier écran sélectionné parmi les écrans et correspondant à une première application Web qui est configurée pour demander l'exécution d'une tâche par l'appareil de traitement d'informations, le procédé de commande comprenant les étapes qui consistent à :
déterminer, lors de l'apparition d'une erreur au cours de l'exécution de la tâche ordonnée par la première application Web parmi les applications Web, si le premier écran correspondant à la première application Web est affiché ou non dans le côté le plus en avant sur l'écran d'affichage de l'unité d'affichage ; et
commander l'unité d'affichage de sorte que :
lorsqu'il est déterminé, dans l'étape de détermination, que le premier écran est affiché dans le côté le plus en avant sur l'écran d'affichage, l'unité d'affichage affiche un premier écran d'erreur pour la notification de l'erreur dans le côté le plus en avant sur l'écran d'affichage, et
lorsqu'il est déterminé, dans l'étape de détermination, que le premier écran n'est pas affiché dans le côté le plus en avant sur l'écran d'affichage, l'unité d'affichage n'affiche pas le premier écran d'erreur dans le côté le plus en avant sur l'écran d'affichage.

10. Programme pour amener un ordinateur à exécuter le procédé de commande pour l'appareil de traitement d'informations selon la revendication 9.
